(19) Europäisches Patentamt
European Patent Office
Office européen des brevets

(11) **EP 3 543 514 B1**

(12) **EUROPÄISCHE PATENTSCHRIFT**

(45) Veröffentlichungstag und Bekanntmachung des Hinweises auf die Patenterteilung:
**16.06.2021   Patentblatt 2021/24**

(51) Int Cl.:
*F02D 41/00* *(2006.01)*     *F02D 41/14* *(2006.01)*

(21) Anmeldenummer: **19164346.9**

(22) Anmeldetag: **21.03.2019**

(54) **VERFAHREN UND REGELKREIS ZUM BESTIMMEN EINER STELLGRÖSSE ZUM EINSTELLEN EINES SAUGROHRDRUCKS**

METHOD AND SYSTEM FOR DETERMINING A VARIABLE FOR ADJUSTING A SUCTION PIPE PRESSURE

PROCÉDÉ ET CIRCUIT DE RÉGLAGE PERMETTANT DE DÉTERMINER UNE GRANDEUR DE RÉGLAGE POUR RÉGLER UNE PRESSION DE TUBE D'ASPIRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2018   DE 102018106849**

(43) Veröffentlichungstag der Anmeldung:
**25.09.2019   Patentblatt 2019/39**

(73) Patentinhaber: **VOLKSWAGEN AKTIENGESELLSCHAFT**
**38440 Wolfsburg (DE)**

(72) Erfinder:
• **GARWON, Maiko**
**38116 Braunschweig (DE)**
• **HENTZELT, Sebastian**
**38106 Braunschweig (DE)**
• **BUNJES, Marco**
**38550 Isenbüttel (DE)**

(74) Vertreter: **MFG Patentanwälte**
**Meyer-Wildhagen Meggle-Freund**
**Gerhard PartG mbB**
**Amalienstraße 62**
**80799 München (DE)**

(56) Entgegenhaltungen:
**DE-A1-102010 023 636     DE-A1-102016 111 065**

• **HYUN MIN DO ET AL: "Design of reference governor for a class of nonlinear systems with input constraints", CONTROL, AUTOMATION AND SYSTEMS (ICCAS), 2011 11TH INTERNATIONAL CONFERENCE ON, IEEE, 26. Oktober 2011 (2011-10-26), Seiten 912-917, XP032075535, ISBN: 978-1-4577-0835-0**
• **Andreas Ortseifen: "Entwurf von modellbasierten Anti-Windup-Methoden für Systeme mit Stellbegrenzungen", , 27. Mai 2013 (2013-05-27), XP055612360, Darmstadt Gefunden im Internet: URL:https://pdfs.semanticscholar.org/fefb/ 8b1573e548c7a653ad451bafcb57713416b0.pdf [gefunden am 2019-08-12]**

**Beschreibung**

Die Erfindung betrifft ein Verfahren und einen Regelkreis zum Bestimmen einer Stellgröße, beispielsweise einer Drosselklappenöffnungsfläche oder einer Drosselklappenposition, zum Einstellen eines Saugrohrdrucks in einem Saugrohr einer Verbrennungskraftmaschine, beispielsweise einer Verbrennungskraftmaschine eines Kraftfahrzeugs.

Für einen effizienten, komfortablen und verbrauchsarmen Betrieb von Verbrennungsmotoren spielt eine genaue Einstellung des Saugrohrdrucks eine wichtige Rolle. Allerdings kann es bedingt durch Fertigungstoleranzen einzelner Bauteile wie der Drosselklappe zu einer fehlerbehafteten Bestimmung und Einstellung des Saugrohrdrucks kommen. Dies kann beispielsweise zu oszillierenden Drosselklappenbewegungen bei toleranzbehafteten Bauteilen der Frischluftseite, aufgrund derer ein für einen Fahrer spürbarer Leerlauf auftritt, oder zu oszillierenden Drosselklappenbewegungen bei einem fehlerbehafteten, beispielsweise undichten, System, welche nicht sicher erkannt wurden, aufgrund derer es zu einer toggelnden Freigabe einer Saugrohrleckagediagnose kommt, führen.

Diese Probleme sind durch den sogenannten Windup-Effekt in einem Regler mit I-Anteil bedingt, dessen Stellgröße begrenzt ist. Wenn ein Sollwert, hier ein Soll-Saugrohrdruck, angestrebt wird, bei dem die Stellgröße einen Stellgrößengrenzwert annimmt, so kann die Strecke über einen langen Zeitraum nicht ausgeregelt werden, wodurch sich der I-Anteil ständig erhöht (windup). Wenn anschließend ein anderer Sollwert angestrebt wird, bei dem die Stellgröße einen Wert zwischen den Stellgrößengrenzen annimmt, so kann es zu starkem Überschwingen oder sogar zur Instabilität des Reglers kommen, da der hohe I-Anteil zunächst durch Überschwingen wieder abgebaut werden muss.

Bisher wurde daher das sogenannte Anti-Windup genutzt, um den Windup-Effekt zu umgehen. Dazu kann der I-Anteil des Reglers in Situationen, in denen die Stellgröße einen Stellgrößengrenzwert annimmt, eingefroren werden, also ein Zustand der Regelung fixiert werden, und eine zyklische Reinitialisierung, hier beispielsweise in einem unteren oder oberen mechanischen Anschlag der Drosselklappe, durchgeführt werden. Allerdings ist so kein kontinuierlicher Betrieb der Regelung möglich und es existiert nicht für alle Betriebsbedingungen eine allgemeine Reinitialisierungvorschrift, so dass ein sehr hoher Abstimmungs- und Absicherungsaufwand notwendig werden.

Ähnliche Lösungen sind auch aus dem Bereich des Elektromotors bekannt, wie die DE 10 2009 000 609 A1 und die DE 10 2015 118 980 A1 beschreiben.

Die DE 10 2016 111 065 A1 betrifft ein Regelverfahren mit modelbasiertem Anti-Windup. Dabei wird einem adaptiven Regler eine Führungsgröße zugeführt, um eine Stellgröße zu erhalten. Die Stellgröße wird einer Stellgrößenbeschränkung unterzogen und die limitierte Stellgröße wird einem Regelkreis zugeführt.

Die DE 10 2010 023 636 A1 beschreibt ein Verfahren zum Betreiben eines Antriebsaggregats, wobei auf Basis eines Sollwerts eine Stellgröße für die Drosselklappe und eine Vorsteuerstellgröße ermittelt werden.

In HYUN MIN DO ET AL: "Design of reference governor for a class of nonlinear systems with input constraints", (CONTROL, AUTOMATIONAND SYSTEMS (ICCAS), 2011 11TH INTERNATIONALCONFERENCEON, IEEE, 26. Oktober 2011(2011-10-26), Seiten 912-917, XPO32075535, ISBN: 978-1-4577-0835-0) wird ein Reference Govenor beschrieben, der zum Bereitstellen eines modifizierten Wertes mit der geringsten Abweichung von dem Eingabewert ausgebildet ist, ohne dabei bestimmte Bedingungen zu verletzen. Dabei wird die Führungsgröße abhängig von einem Grenzwert, der durch einen maximalen Stellwert und einen minimalen Stellwert gegeben ist, modifiziert.

Aufgabe der vorliegenden Erfindung ist es, ein Verfahren und einen Regelkreis zum Bestimmen einer Stellgröße zum Einstellen eines Saugrohrdrucks bereitzustellen, die die oben genannten Nachteile wenigstens teilweise überwinden.

Diese Aufgabe wird durch das erfindungsgemäße Verfahren zum Bestimmen einer Stellgröße zum Einstellen eines Saugrohrdrucks nach Anspruch 1 und der erfindungsgemäßen Motorsteuerung nach Anspruch 2 gelöst.

Nach einem ersten Aspekt betrifft die Erfindung ein Verfahren zum Bestimmen einer Stellgröße zum Einstellen eines Saugrohrdrucks in einem Saugrohr einer Verbrennungskraftmaschine ausgehend von einem Soll-Saugrohrdruck, wobei der Soll-Saugrohrdruck in Abhängigkeit eines Stellgrößengrenzwerts und/oder einer von dem Stellgrößengrenzwert beeinflussten Größe korrigiert wird.

Nach einem zweiten Aspekt betrifft die Erfindung eine Motorsteuerung mit einem Regelkreis zum Bestimmen einer Stellgröße zum Einstellen eines Saugrohrdrucks in einem Saugrohr einer Verbrennungskraftmaschine ausgehend von einem Soll-Saugrohrdruck, wobei der Regelkreis eine Korrektureinheit zum Korrigieren des Soll-Saugrohrdrucks in Abhängigkeit eines Stellgrößengrenzwerts und/oder einer von dem Stellgrößengrenzwert beeinflussten Größe umfasst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Bestimmen einer Stellgröße zum Einstellen eines Saugrohrdrucks in einem Saugrohr einer Verbrennungskraftmaschine. Die Stellgröße kann beispielsweise eine Drosselklappenöffnungsfläche (Drosselklappen-Leckage-Fläche) oder eine Drosselklappenposition einer Drosselklappe sein, die in dem Saugrohr angeordnet ist. Die Verbrennungskraftmaschine kann eine Verbrennungskraftmaschine eines Kraftfahrzeugs sein, beispielsweise ein Otto-Motor oder ein Dieselmotor.

Beim Bestimmen der Stellgröße wird von einem Soll-Saugrohrdruck ausgegangen, der vorzugsweise in Abhängigkeit einer aktuellen Betriebssituation der Verbrennungskraftmaschine und einem Fahrerwunsch ermittelt ist. Gemäß dem erfindungsgemäßen Verfahren wird der Soll-Saugrohrdruck dann in Abhängigkeit eines Stellgrößengrenzwerts, vorzugsweise einem oberen Stellgrößengrenzwert und einem unteren Stellgrößengrenzwert, und/oder einer von dem Stellgrößengrenzwert beeinflussten Größe, vorzugsweise einer von dem oberen Stellgrößengrenzwert und dem unteren Stellgrößengrenzwert beeinflussten Größe, korrigiert. Der Stellgrößengrenzwert, insbesondere der obere Stellgrößengrenzwert und der untere Stellgrößengrenzwert, kann durch einen Aufbau der Verbrennungskraftmaschine, insbesondere durch einen Aufbau der Drosselklappe sowie gegebenenfalls einer Anordnung der Drosselklappe im Saugrohr, festgelegt sein.

Durch die Korrektur des Soll-Saugrohrdrucks in Abhängigkeit des Stellgrößengrenzwerts und/oder einer von dem Stellgrößengrenzwert beeinflussten Größe kann der Soll-Saugrohrdruck so begrenzt werden, dass Werte der Stellgröße, die außerhalb von Stellgrößengrenzen liegen, nicht mehr angestrebt werden. Die Erfindung stellt also ein Verfahren für den kontinuierlichen Betrieb einer nicht-linearen Druckregelung über einen gedrosselten Bereich unter Vermeidung eines Windups eines Integrators im Regelkreis zur Verfügung. Eine Reinitialisierungsvorschrift mit allen Nachteilen wird somit überflüssig und der Applikations- und Absicherungsaufwand kann stark reduziert werden.

Der Stellgrößengrenzwert umfasst eine maximale Drosselklappenöffnungsfläche der Drosselklappe in dem Saugrohr und/oder eine minimale Drosselklappenöffnungsfläche der Drosselklappe. Vorzugsweise ist der obere Stellgrößengrenzwert die maximale Drosselklappenöffnungsfläche der Drosselklappe und der untere Stellgrößengrenzwert die minimale Drosselklappenöffnungsfläche der Drosselklappe. Alternativ kann der Stellgrößengrenzwert eine erste Drosselklappenposition, in der die Drosselklappe maximal geöffnet ist, und/oder eine zweite Drosselklappenposition, in der die Drosselklappe maximal geschlossen ist, umfassen. In der ersten Drosselklappenposition kann die Drosselklappe so weit geöffnet sein, dass die Drosselklappenöffnungsfläche mindestens 90% einer Querschnittsfläche des Saugrohrs beträgt. In der zweiten Drosselklappenposition kann die Drosselklappe noch geringfügig geöffnet sein, beispielsweise zu höchsten 5%, insbesondere 2%, einer vollständigen Öffnung der Drosselklappe in der ersten Drosselklappenposition. Die von dem Stellgrößengrenzwert beeinflusste Größe kann eine Größe sein, die eine mittels der maximalen Drosselklappenöffnungsfläche und/oder der minimalen Drosselklappenöffnungsfläche limitierte Drosselklappenöffnungsfläche enthält. Alternativ kann die von dem Stellgrößengrenzwert beeinflusste Größe eine Größe sein, die eine mittels der ersten Drosselklappenposition und/oder der zweiten Drosselklappenposition limitierte Drosselklappenposition enthält. Beim Limitieren der Stellgröße kann geprüft werden, ob der Wert der Stellgröße größer als der obere Stellgrößengrenzwert ist, und wenn dies der Fall ist, kann die Stellgröße dem oberen Stellgrößengrenzwert gleichgesetzt werden. Wenn dies nicht der Fall ist, kann geprüft werden, ob der Wert der Stellgröße kleiner als der untere Stellgrößengrenzwert ist, und wenn dies der Fall ist, kann die Stellgröße dem unteren Stellgrößengrenzwert gleichgesetzt werden. Wenn dies nicht der Fall ist, liegt die Stellgröße in einem Bereich von dem oberen Stellgrößengrenzwert zu dem unteren Stellgrößengrenzwert und die Stellgröße bleibt unverändert. Alternativ kann auch zuerst geprüft werden, ob der Wert der Stellgröße kleiner als der untere Stellgrößengrenzwert ist, und anschließend, ob der Wert der Stellgröße größer als der obere Stellgrößengrenzwert ist. Die Limitierung kann auch auf andere Weise erfolgen.

In manchen Ausführungsbeispielen kann die Stellgröße mittels einer PI-Regelung des korrigierten Sollsaugrohrdrucks, einer nichtlinearen Transformation des geregelten Soll-Saugrohrdrucks in eine unlimitierte Stellgröße und einer Limitierung der unlimitierten Stellgröße mittels des Stellgrößengrenzwerts bestimmt werden. Die limitierte Stellgröße kann eine limitierte Drosselklappenöffnungsfläche sein, die wie oben beschrieben mittels des Stellgrößengrenzwerts, insbesondere mittels der maximalen Drosselklappenöffnungsfläche und der minimalen Drosselklappenöffnungsfläche, bestimmt ist. Aus der limitierten Drosselklappenöffnungsfläche kann eine Drosselklappenposition berechnet werden. Alternativ kann die limitierte Stellgröße eine limitierte Drosselklappenposition sein, die analog zur Limitierung der Drosselklappenöffnungsfläche limitiert sein kann.

Die PI-Regelung kann den Gesetzen eines herkömmlichen PI-Reglers folgen, also eine Bestimmung eines P-Anteils (proportionaler Anteil) und eines I-Anteils (integraler Anteil) umfassen. Die nichtlineare Transformation kann auf einem nichtlinearen Zusammenhang für einen Einfluss von Eigenschaften bzw. aktuellen Betriebsbedingungen der Drosselklappe auf den Saugrohrdruck basieren. Der nichtlineare Zusammenhang kann beispielsweise von einem Leckage-Offset der Drosselklappe, einem Massenstrom durch die Drosselklappe, einem Druck vor der Drosselklappe und einem Druck nach der Drosselklappe beeinflusst sein. Der Leckage-Offset beschreibt insbesondere Bauteiltoleranzen in dem Saugrohr, insbesondere der Drosselklappe, die zu ungewollten oszillierenden Drosselklappenbewegungen führen können. Die Limitierung, insbesondere mittels Flächengrenzen, also der maximalen Drosselklappenöffnungsfläche und der minimalen Drosselklappenöffnungsfläche, kann, wie oben beschreiben, erfolgen.

In manchen Ausführungsbeispielen kann ausgehend von dem Stellgrößengrenzwert oder der von dem Stellgrößengrenzwert beeinflussten Größe mittels einer Transformation ein Soll-Saugrohrdruck-Korrekturwert zum Korrigieren des Soll-Saugrohrdrucks bestimmt werden. In dem Fall, dass die Stellgröße eine Drosselklappenöffnungsfläche ist, kann es sich bei der Transformation des Stellgrößengrenzwerts um eine Invertierung analog einer Invertierung der Drosselklappenöffnungsfläche handeln. Beispielsweise können die obere Drosselklappenöffnungsfläche und die untere Drosselklappenöffnungsfläche bzw. die limitierte Drosselklappenöffnungsfläche invertiert werden.

Vorzugsweise kann es sich bei der Transformation um eine Rücktransformation zu der Transformation des korrigierten, geregelten Soll-Saugrohrdrucks handeln. Es kann sich also um eine Transformation der nicht-linearen Stellgrößengrenzwerte, die vorzugsweise in einer Stellgrößenbeschränkung resultieren, in einen Zustandsbereich des Reglers handeln. Die transformierten Stellgrößengrenzwerte bzw. die Stellgrößenbeschränkungen können genutzt werden, um den Soll-Saugrohrdruck des Regelkreises geeignet anzupassen, so dass Windup Effekte vermieden werden.

Durch die Korrektur des Soll-Saugrohrdrucks können die zyklischen Drosselklappenoszillationen bei einer Leckage der Drosselklappe, beispielsweise im Leerlauf, auf effiziente und einfache Weise behoben werden. Es kann somit auf eine Applikation von Schaltschranken und Re-Initialisierungsparametern verzichtet werden.

Die maximale Drosselklappenöffnungsfläche wird in einen maximal realisierbaren Saugrohrdruck transformiert, die Drosselklappenöffnungsfläche wird in einen minimal realisierbaren Saugrohrdruck transformiert und/oder der Soll-Saugrohrdruck wird in Abhängigkeit des transformierten maximal realisierbaren Saugrohrdrucks und des transformierten minimal realisierbaren Saugrohrdrucks limitiert. Die Limitierung kann anlog zu der oben beschriebenen Limitierung der Drosselklappenöffnungsfläche erfolgen. Somit kann der Soll-Saugrohrdruck exakt auf Grenzen beschränkt werden, die keine Verletzung der Stellgrößenbeschränkungen zulassen, also weder den oberen Stellgrößengrenzwert überschreiten noch den unteren Stellgrößengrenzwert unterschreiten. Dadurch kann eine Performance verbessert werden und gleichzeitig der Applikations- und Absicherungsaufwand reduziert werden.

Der Transformation der maximalen Drosselklappenöffnungsfläche in den maximal realisierbaren Saugrohrdruck $p^{*,max}$ liegt die folgende Beziehung zugrunde :

$$p^{*,max} = \Delta p_{sr} + \tilde{p}_{sr} + b A_{eff}^{max} \qquad (1)$$

Dabei ist $\Delta p_{sr}$ eine prognostizierte Veränderung des Saugrohrdrucks, die vorzugsweise mittels eines Modells eines Einflusses der Drosselklappe und/oder eines Modells des Saugrohrdrucks und der I-Regelung ermittelt ist, $\tilde{p}_{sr}$ ein gemessener Saugrohrdruck, $b$ eine Variable, die von einem Durchflussfaktor durch die Drosselklappe, einer Leckage der Drosselklappe, dem Massenstrom durch die Drosselklappe und eines P-Anteils einer PI-Regelung abhängig ist, und $A_{eff}^{max}$ die maximale Drosselklappenöffnungsfläche. Insbesondere kann der Transformation die folgende Beziehung zugrunde liegen:

$$p^{*,max} = \Delta p_{sr} + \tilde{p}_{sr} + \frac{\mu_{mult}}{36000 K_4} \left( A_{eff}^{max} + A_{efcOffset} - \mu_{off} \right) \qquad (1a)$$

Dabei ist $\mu_{mult}$ ein Durchflussfaktor durch die Drosselklappe, $K_4$ ein Verstärkungsfaktor der P-Regelung, $A_{effOffset}$ der Leckage-Offset und $\mu_{off}$ ein Massenstrom durch die Drosselklappe.

Entsprechend liegt der Transformation der minimalen Drosselklappenöffnungsfläche in den minimal realisierbaren Saugrohrdruck $p^{*,min}$ die folgende Beziehung zugrunde:

$$p^{*,min} = \Delta p_{sr} + \tilde{p}_{sr} + b A_{eff}^{min} \qquad (2)$$

Dabei ist $A_{eff}^{min}$ die minimale Drosselklappenöffnungsfläche. Insbesondere kann der Transformation der minimalen Drosselklappenöffnungsfläche die folgende Beziehung zugrunde liegen:

$$p^{*,min} = \Delta p_{sr} + \tilde{p}_{sr} + \frac{\mu_{mult}}{36000 K_4} \left( A_{eff}^{min} + A_{efcOffset} - \mu_{off} \right) \qquad (2a)$$

Mittels der Gleichungen (1) und (2) bzw. der Gleichungen (1a) und (2a) kann eine Rücktransformation der nichtlinearen Stellgrößengrenzwerte, insbesondere des oberen Stellgrößengrenzwerts $A_{eff}^{max}$ und des unteren Stellgrößengrenzwerts $A_{eff}^{min}$, erfolgen.

Analog kann der maximal realisierbare Saugrohrdruck aus der ersten Drosselklappenposition und der minimal realisierbare Saugrohrdruck aus der zweiten Drosselklappenposition transformiert werden.

Mittels der rücktransformierten Stellgrößengrenzwerte kann eine Limitierung des Soll-Saugrohrdrucks auf einen zulässigen Stellgrößenbereich erfolgen und der Windup-Effekt zuverlässig vermieden werden.

In manchen Ausführungsbeispielen kann eine Differenz zwischen einer unlimitierten Stellgröße und einer limitierten Stellgröße, beispielsweise zwischen einer unlimitierten Drosselklappenöffnungsfläche und der limitierten Drosselklappenöffnungsfläche, in eine Druckdifferenz transformiert werden und der Soll-Saugrohrdruck in Abhängigkeit der transformierten Druckdifferenz angepasst werden. Somit kann eine kontinuierliche Rückführung der Differenz der unlimitierten und limitierten Stellgröße auf einen geforderten Soll-Saugrohrdruck durchgeführt werden.

In manchen Ausführungsbeispielen kann für die Bestimmung der transformierten Druckdifferenz $\Delta p_{sr}^*$ gelten:

$$\Delta p_{sr}^* = c\left(A_{efcLim} - A_{effUnLim}\right) \tag{3}$$

Dabei ist c eine Variable, die von der P-Regelung und einem Durchflussfaktor durch die Drosselklappe beeinflusst ist, $A_{efcLim}$ die limitierte Drosselklappenöffnungsfläche und $A_{efcUnLim}$ die unlimitierte Drosselklappenöffnungsfläche.

Vorzugsweise kann die Rücktransformation von nichtlinearer unbegrenzter und begrenzter Drosselklappenöffnungsfläche der folgenden Beziehung folgen:

$$\Delta p_{sr}^* = K_5\, 360000\, \mu_{mult}\left(A_{efcLim} - A_{effUnLim}\right) \tag{3a}$$

Dabei ist $K_5$ ein Verstärkungsfaktor der P-Regelung.

Analog kann die transformierte Druckdifferenz auch aus einer Differenz einer limitierten Drosselklappenposition und einer unlimitierten Drosselklappenposition transformiert werden.

Es kann somit eine Rückführung der Differenz aus transformierter, limitierter und unlimitierter Stellgröße auf einen Eingang des Integrators des Druckreglers erfolgen. Die Rückführung führt vorzugsweise zu einer algebraischen Schleife. Diese kann jedoch durch eine Fix-Punkt-Iteration aufgelöst werden.

Die Korrektur des Soll-Saugrohrdrucks sowohl in Abhängigkeit eines Stellgrößengrenzwerts, insbesondere des oberen Stellgrößengrenzwerts und des unteren Stellgrößengrenzwerts, als auch in Abhängigkeit der von dem Stellgrößengrenzwert beeinflussten Größe, insbesondere einer Differenz aus limitierter und unlimitierter Stellgröße, ist tauglich, die Oszillationen der Drosselklappe zu beheben. Beide Konzepte können einen schnellen negativen Lastschlag darstellen.

Weiterhin betrifft die vorliegende Erfindung eine Motorsteuerung gemäß Anspruch 2.

In dem Fall, dass die Stellgröße die Drosselklappenöffnungsfläche ist, kann der Regler weiterhin eine Umrechnungseinheit zum Berechnen einer Drosselklappenposition aus der limitierten Drosselklappenöffnungsfläche umfassen. Der Regelkreis kann weiterhin eine Einstelleinheit zum Einstellen der bestimmten Drosselklappenposition umfassen. Durch das Einstellen der Drosselklappenposition wird der Saugrohrdruck eingestellt.

In manchen Ausführungsbeispielen kann der Regelkreis weiterhin eine Rücktransformationseinrichtung umfassen, die dazu ausgebildet ist, ausgehend von dem Stellgrößengrenzwert oder der von dem Stellgrößengrenzwert beeinflussten Größe mittels einer Transformation einen Soll-Saugrohrdruck-Korrekturwert zum Korrigieren des Soll-Saugrohrdrucks zu bestimmen, wie es oben im Detail beschrieben ist.

Die vorliegende Erfindung zeichnet sich durch eine Rücktransformation der Stellgrößenbeschränkung auf den Zustandsraum des linearen Teils des Reglers und ein Zusammenspiel des Gesamtsystems zwischen dem Anti-Windup (basierend auf der Rückführung der Rücktransformation der beschränkten Stellgröße), dem nicht-linearen Druckregler und dem Parallelmodell des geschlossenen Regelkreises einschließlich des Integrators zur Gewährleistung der stationären Genauigkeit aus.

Ausführungsbeispiele der Erfindung werden nun beispielhaft und unter Bezugnahme auf die beigefügten Zeichnungen beschrieben. Es zeigt:

Fig. 1 schematisch eine Darstellung einer Antriebsanordnung und eines Steuergeräts mit einem Regelkreis zum Bestimmen einer Drosselklappenöffnungsfläche;

Fig. 2 schematisch einen herkömmlichen Regelkreis;

Fig. 3 schematisch ein erstes Ausführungsbeispiel eines erfindungsgemäßen Regelkreises mit einer Limitierung des Soll-Saugrohrdrucks;

Fig. 4 ein Flussdiamamm eines Verfahrens zum Bestimmen einer Stellgröße zum Einstellen eines Saugrohrdrucks in einem Saugrohr einer Verbrennungskraftmaschine mit dem Regelkreis des ersten Ausführungsbeispiels;

Fig. 5 schematisch ein zweites Ausführungsbeispiel eines erfindungsgemäßen Regelkreises mit einer Limitierung des Soll-Saugrohrdrucks; und

Fig. 6 ein Flussdiagramm eines Verfahrens zum Bestimmen einer Stellgröße zum Einstellen eines Saugrohrdrucks in einem Saugrohr einer Verbrennungskraftmaschine mit dem Regelkreis des zweiten Ausführungsbeispiels.

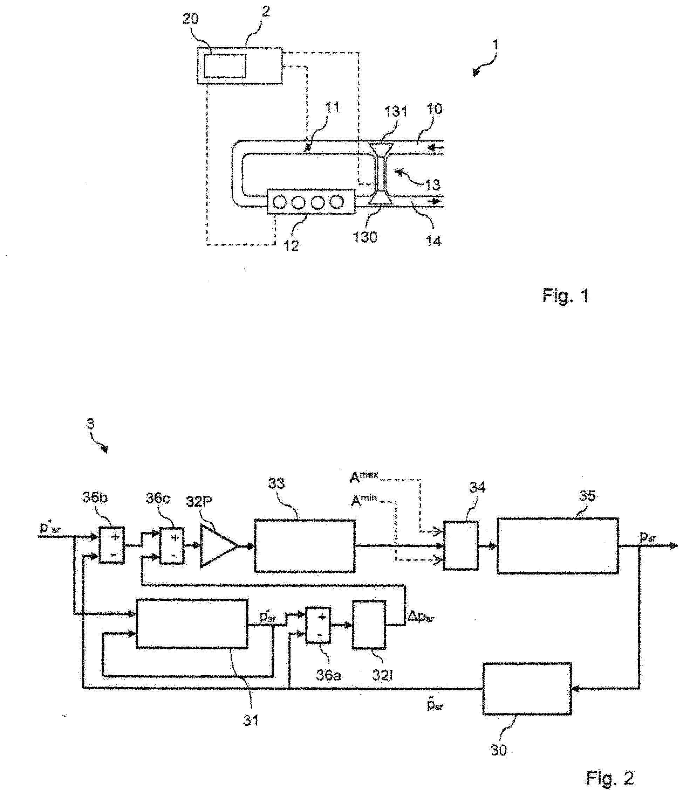

Fig. 1 zeigt einen Ausschnitt einer Antriebsanordnung 1. Die Antriebsanordnung 1 weist ein Saugrohr 10, eine Drosselklappe 11, eine Verbrennungskraftmaschine 12, einen Abgasturbolader 13 und einen Abgaskanal 14 auf. Die Drosselklappe 11 ist in dem Saugrohr 10 angeordnet und dazu ausgelegt, eine Zufuhr von Frischluft in die Verbrennungskraftmaschine 12 zu regeln. Die Verbrennungskraftmaschine 12 ist mit dem Saugrohr 10 und mit dem Abgaskanal 14 verbunden. Der Abgasturbolader 13, der zur Regelung eines Ladedrucks in dem Saugrohr 10 vorgesehen ist, weist eine Turbine 130 und einen Verdichter 131, der über eine Welle mit der Turbine 130 verbunden ist, auf. Die Turbine 130 ist in dem Abgaskanal 14 angeordnet und wird durch aus der Verbrennungskraftmaschine 12 ausströmendes Abgas angetrieben. Der Verdichter 131 ist im Saugrohr 10 angeordnet und verdichtet, angetrieben von der Turbine 130, die Luft in dem Saugrohr 10.

Die Antriebsanordnung 1 umfasst außerdem eine Motorsteuerung 2, die einen Regelkreis 20 zum Einstellen eines Saugrohrdrucks in dem Saugrohr aufweist.

In herkömmlichen Antriebsvorrichtungen ist der Regelkreis 20 häufig wie mit Bezug auf Fig. 2 beschrieben ausgebildet. Fig. 2 zeigt einen Regelkreis 3 mit einem Saugrohrdruck-Sensor 30, einem Störgrößenbeobachter 31, einem PI-Regler, der eine P-Regelung 32P und eine I-Regelung 32I umfasst, einem nichtlinearen Transformator 33, einem Stellgrößenbegrenzer 34 und einer Umrechnungs- und Einstelleinheit 35.

Der Saugrohrdruck-Sensor 30 misst einen aktuellen Ist-Saugrohrdruck $p_{sr}$ und sendet ein Messsignal $\hat{p}_{sr}$, das den detektierten Ist-Saugrohrdruck $p_{sr}$ repräsentiert, an einen ersten Subtrahierer 36a, der der I-Regelung 32I vorgeschaltet ist, an den Störgrößenbeobachter 31, der dem ersten Subtrahierer 36a vorgeschaltet ist, und an einen zweiten Subtrahierer 36b.

Der Störgrößenbeobachter 31 ist dazu vorgesehen, auf Grundlage eines Soll-Saugrohrdrucks $p_{sr}^{*}$ und des Messsignals $\hat{p}_{sr}$ mittels eines Modells, das einen Einfluss der Drosselklappe auf den Saugrohrdruck beschreibt, sowie mittels eines Saugrohrdruckmodells einen voraussichtlichen Saugrohrdruck $\tilde{p}_{sr}$ zu bestimmen. Dabei gibt der voraussichtliche Saugrohrdruck $\tilde{p}_{sr}$ an, welcher Ist-Saugrohrdruck sich einstellen wird.

Der erste Subtrahierer 36a bildet eine Differenz zwischen dem Messsignal $\hat{p}_{sr}$ und dem voraussichtlichen Saugrohrdruck $\tilde{p}_{sr}$ und gibt diese an die I-Regelung 32I weiter. Die I-Regelung 32I unterzieht die Differenz zwischen dem Messsignal $\hat{p}_{sr}$ und dem voraussichtlichen Saugrohrdruck $\tilde{p}_{sr}$ einer integralen Regelung und gibt das Ergebnis $\Delta p_{sr}$ an einen dritten Subtrahierer 36c weiter, der dem zweiten Subtrahierer 36b nachgeschaltet und der P-Regelung 32P vorgeschaltet ist.

Der zweite Subtrahierer 36b bildet eine Differenz aus dem Soll-Saugrohrdruck $p_{sr}^{*}$ und dem Messsignal $\hat{p}_{sr}$ und gibt diese an den dritten Subtrahierer 36c weiter. Der dritte Subtrahierer 36c bildet eine Differenz aus der Differenz aus dem Soll-Saugrohrdruck $p_{sr}^{*}$ und dem Messsignal $\hat{p}_{sr}$ und dem Ergebnis $\Delta p_{sr}$ der I-Regelung und gibt das Ergebnis an die P-Regelung 32P weiter.

Die P-Regelung 32P unterzieht das Ergebnis des dritten Subtrahierer 36c einer proportionalen Regelung und gibt das Ergebnis an den nichtlinearen Transformator 33 weiter. Dieser führt eine nichtlineare Transformation durch, um eine Soll-Drosselklappenöffnungsfläche zu bestimmen, und gibt die Soll-Drosselklappenöffnungsfläche an den Stellgrößenbegrenzer 34 aus. Mit Hilfe einer maximal möglichen Drosselklappenöffnungsfläche $A_{eff}^{max}$ und einer minimal möglichen Drosselklappenöffnungsfläche $A_{eff}^{min}$, die von dem Aufbau der Drosselklappe und dem Einbau dieser in das Saugrohr vorgegeben sind, korrigiert der Stellgrößenbegrenzer 34 die Soll-Drosselklappenöffnungsfläche und gibt die korrigierte Soll-Drosselklappenöffnungsfläche an die Umrechnungs- und Einstelleinheit 35 weiter. Der Stellgrößenbegrenzer 34 prüft, ob die Soll-Drosselklappenöffnungsfläche zwischen der maximal möglichen Drosselklappenöffnungsfläche $A_{eff}^{max}$ und der minimal möglichen Drosselklappenöffnungsfläche $A_{eff}^{min}$ liegt und passt die Soll-Drosselklappenöffnungsfläche nur an, wenn dies nicht der Fall ist. Die Umrechnungs- und Einstelleinheit 35 berechnet aus der korrigierten Drosselklappenöffnungsfläche (limitierten Drosselklappenöffnungsfläche) eine Drosselklappenposition und stellt diese Drosselklappenposition ein. Dadurch wird der Ist-Saugrohrdruck $p_{sr}$ eingestellt.

Der mit Bezug auf Fig. 2 beschriebene Regelkreis 3 hat den Nachteil, dass, wenn der Soll-Saugrohrdruck einen Wert anstrebt, bei dem die Drosselklappenöffnungsfläche größer bzw. kleiner als die maximal oder minimal mögliche Drosselklappenöffnungsfläche ist, über einen langen Zeitraum keine Ausregelung möglich ist, wodurch sich der I-Anteil ständig erhöht (windup). Wenn der Soll-Saugrohrdruck anschließend einen anderen Wert anstrebt, bei dem die Drosselklappenöffnungsfläche einen Wert zwischen der maximal oder minimal möglichen Drosselklappenöffnungsfläche annimmt, so kann es zu starkem Überschwingen des Reglers kommen, da der hohe I-Anteil zunächst durch Überschwingen wieder abgebaut werden muss. Daher musste die I-Regelung in dem erstgenannten Fall bisher eingefroren werden, was eine aufwendige Reinitialisierung nach sich zieht.

Nachfolgend werden aufbauend auf dem Regelkreis 3 der Fig. 2 zwei Ausführungsbeispiele eines erfindungsgemäßen Regelkreises beschrieben, die ein Einfrieren der I-Regelung und damit auch die Reinitialisierung überflüssig machen und die Regelung des Saugrohrdrucks deutlich vereinfachen.

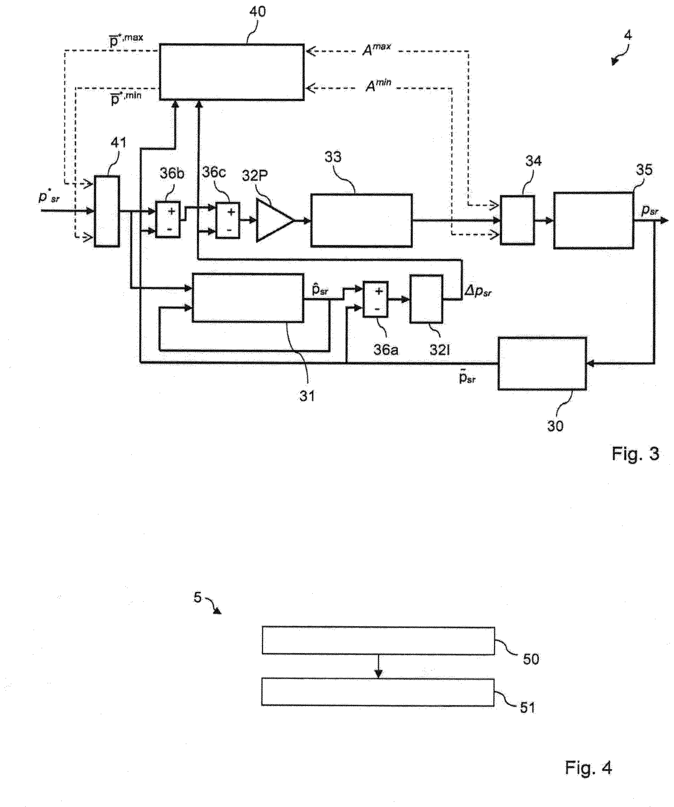

Fig. 3 zeigt ein ersten Ausführungsbeispiel eines erfindungsgemäßen Regelkreises 4. Zusätzlich zu den Komponenten des Regelkreises 3 der Fig. 2 umfasst der Regelkreis 4 eine Rücktransformationseinrichtung 40 und einen Sollgrößenbegrenzer 41. Die Rücktransformationseinrichtung 40 ist dazu ausgebildet, unter Berücksichtigung des Messsignals $\hat{p}_{sr}$ und des Ergebnisses $\Delta p_{sr}$ der I-Regelung 32I die maximal mögliche Drosselklappenöffnungsfläche $A_{eff}^{max}$ in einen maximal realisierbaren Soll-Saugrohrdruck $p^{*,max}$ und die minimal mögliche Drosselklappenöffnungsfläche $A_{eff}^{min}$ in einen minimal realisierbaren Soll-Saugrohrdruck $p^{*,min}$ zu transformieren. Der Sollgrößenbegrenzer 41 ist dazu ausgebildet, den Soll-Saugrohrdruck $p_{sr}^{*}$ in Abhängigkeit des maximal realisierbaren Soll-Saugrohrdrucks $p^{*,max}$ und des minimal realisierbaren Soll-Saugrohrdruck $p^{*,min}$ zu korrigieren. Der Sollgrößenbegrenzer 41 arbeitet dabei analog zu dem Stellgrößenbegrenzer 34.

Fig. 4 zeigt ein Flussdiagramm eines Verfahrens 5 zum Korrigieren des Soll-Saugrohrdrucks mittels des Regelkreises 4 des ersten Ausführungsbeispiels.

Bei 50 wird die maximal mögliche Drosselklappenöffnungsfläche in einen maximal realisierbaren Saugrohrdruck transformiert. Die Transformation erfolgt auf Grundlage der oben bereits eingeführten Beziehungen

$$p^{*,max} = \Delta p_{sr} + \tilde{p}_{sr} + \frac{\mu_{mult}}{36000K_4}\left(A_{eff}^{max} + A_{efcOffset} - \mu_{off}\right) \qquad (1a)$$

bzw.

$$p^{*,min} = \Delta p_{sr} + \tilde{p}_{sr} + \frac{\mu_{mult}}{36000K_4}\left(A_{eff}^{min} + A_{efcOffset} - \mu_{off}\right) \qquad (2a).$$

Bei 51 wird der Soll-Saugrohrdruck in Abhängigkeit des transformierten maximal realisierbaren Saugrohrdrucks $p^{*,max}$ und des transformierten minimal realisierbaren Saugrohrdrucks $p^{*,min}$ limitiert. Der Sollgrößenbegrenzer 41 prüft, ob der Soll-Saugrohrdruck $p_{sr}^{*}$ zwischen dem maximal realisierbaren Soll-Saugrohrdruck $p^{*,max}$ und dem minimal realisierbaren Soll-Saugrohrdruck $p^{*,min}$ liegt und passt den Soll-Saugrohrdruck $p_{sr}^{*}$ nur an, wenn dies nicht der Fall ist.

Durch die Korrektur des Soll-Saugrohrdrucks $p_{sr}^{*}$ durch die Limitierung tritt der Fall nicht mehr auf, dass der Soll-Saugrohrdruck einen Wert anstrebt, bei dem die Drosselklappenöffnungsfläche die maximal mögliche Drosselklappenöffnungsfläche überschreitet oder die minimal mögliche Drosselklappenöffnungsfläche unterschreitet, da zum Einstellen jedes korrigierten Soll-Saugrohrdrucks eine realisierbare Drosselklappenöffnungsfläche bzw. eine realisierbare Drosselklappenposition existiert. Folglich kann der Regelkreis kontinuierlich ausgeregelt werden und ein Einfrieren der I-Regelung sowie eine Reinitialisierung werden überflüssig.

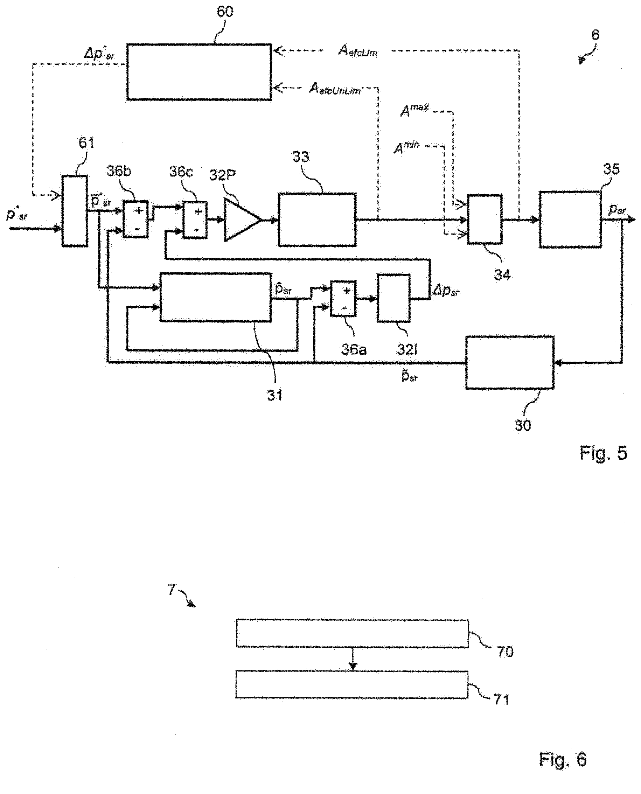

Fig. 5 zeigt ein zweites Ausführungsbeispiel eines erfindungsgemäßen Regelkreises 6. Zusätzlich zu den Komponenten des Regelkreises 3 der Fig. 2 umfasst der Regelkreis 6 eine Rücktransformationseinrichtung 60 und eine Korrektureinheit 61. Die Rücktransformationseinrichtung 60 ist dazu ausgebildet, eine Differenz zwischen der limitierten Drosselklappenöffnungsfläche $A_{efcLim}$ und der unlimitierten Drosselklappenöffnungsfläche $A_{efcUnLim}$ in eine Druckdiffe-

renz $\Delta p_{sr}^*$ zu transformieren. Die Korrektureinheit 61 ist als Addierer ausgebildet, der die Druckdifferenz $\Delta p_{sr}^*$ und den Soll-Saugrohrdruck $p_{sr}^*$ addiert und die Summe als korrigierten Soll-Saugrohrdruck $\bar{p}_{sr}^*$ ausgibt.

Fig. 6 zeigt ein Flussdiagramm eines Verfahrens 7 zum Korrigieren des Soll-Saugrohrdrucks mittels des Regelkreise 6 des zweiten Ausführungsbeispiels.

Bei 70 wird eine Differenz $A_{efcLim}$ - $A_{efcUnLim}$ zwischen der limitierten Drosselklappenöffnungsfläche $A_{efcLim}$ und der unlimitierten Drosselklappenöffnungsfläche $A_{efcUnLim}$ gebildet und die Differenz $A_{efcLim}$ - $A_{efcUnLim}$ gemäß der oben bereits erwähnten folgenden Beziehung in die Druckdifferenz $\Delta p_{sr}^*$ transformiert:

$$\Delta p_{sr}^* = K_5\, 360000\, \mu_{mult}\left(A_{efcLim} - A_{effUnLim}\right) \qquad (3a)$$

Bei 71 wird die Summe aus der Druckdifferenz $\Delta p_{sr}^*$ und dem Soll-Saugrohrdruck $p_{sr}^*$ gebildet und als korrigierter Soll-Saugrohrdruck $\bar{p}_{sr}^*$ ausgegeben.

Die Rücktransformationseinrichtung 60 und die Korrektureinheit 61 bilden zusammen mit dem zweiten und dritten Subtrahierer, der P-Regelung, dem nichtlinearen Transformator und dem Stellgrößenbegrenzer eine algebraische Schleife. Die algebraische Schleife lässt sich bei Bedarf beispielsweise als Fix-Punkt-Iteration auflösen.

Wiederum wird der Fall, dass der Soll-Saugrohrdruck einen Wert anstrebt, bei dem die Drosselklappenöffnungsfläche größer bzw. kleiner als die maximal oder minimal mögliche Drosselklappenöffnungsfläche ist, durch die Korrektur des Soll-Saugrohrdrucks $p_{sr}^*$ effektiv verhindert. Folglich kann der Regelkreis kontinuierlich ausgeregelt werden und ein Einfrieren der I-Regelung sowie eine Reinitialisierung werden überflüssig.

**Bezugszeichenliste**

| | |
|---|---|
| 1 | Antriebsvorrichtung |
| 10 | Saugrohr |
| 11 | Drosselklappe |
| 12 | Verbrennungskraftmaschine |
| 13 | Abgasturbolader |
| 130 | Turbine |
| 131 | Verdichter |
| 14 | Abgaskanal |
| 2 | Motorsteuerung |
| 20 | Regelkreis zum Einstellen des Saugrohrdrucks |
| 3 | herkömmlicher Regelkreis |
| 30 | Saugrohrdruck-Sensor |
| 31 | Störgrößenbeobachter |
| 32P | P-Regelung |
| 32I | I-Regelung |
| 33 | nichtlinearer Transformator |
| 34 | Stellgrößenbegrenzer |
| 35 | Umrechnungs- und Einstelleinheit |
| 36a, 36b, 36c | Subtrahierer |
| 4 | Regelkreis nach dem ersten Ausführungsbeispiel |
| 40 | Rücktransformationseinrichtung |
| 41 | Sollgrößenbegrenzer |
| 5 | Verfahren zum Korrigieren des Soll-Saugrohrdrucks mittels des Regelkreise 4 |
| 50 | Transformation der maximal und minimal mögliche Drosselklappenöffnungsfläche |
| 51 | Limitieren des Soll-Saugrohrdrucks |
| 6 | Regelkreis nach dem zweiten Ausführungsbeispiel |

60          Rücktransformationseinrichtung
61          Korrektureinheit
7           Verfahren zum Korrigieren des Soll-Saugrohrdrucks mittels des Regelkreise 6
70          Transformation der maximal und minimal möglichen Drosselklappenöffnungsfläche
71          Limitieren des Soll-Saugrohrdrucks

**Patentansprüche**

1. Verfahren zum Bestimmen einer Stellgröße zum Einstellen eines Saugrohrdrucks in einem Saugrohr (10) einer Verbrennungskraftmaschine ausgehend von einem Soll-Saugrohrdruck $(p_{sr}^*)$, wobei der Soll-Saugrohrdruck $(p_{sr}^*)$ in Abhängigkeit eines Stellgrößengrenzwerts $(A_{eff}^{max}, A_{eff}^{min})$ und/oder einer von dem Stellgrößengrenzwert beeinflussten Größe ($A_{efcLim}$ - $A_{efcUnLim}$) limitiert wird,

wobei der Stellgrößengrenzwert eine maximale Drosselklappenöffnungsfläche $(A_{eff}^{max})$ einer Drosselklappe (11) in dem Saugrohr (10) und/oder eine minimale Drosselklappenöffnungsfläche $(A_{eff}^{min})$ der Drosselklappe (11) umfasst und/oder wobei die von dem Stellgrößengrenzwert beeinflusste Größe ($A_{efcLim}$ - $A_{efcUnLim}$) eine Größe ist, die eine mittels der maximalen Drosselklappenöffnungsfläche $(A_{eff}^{max})$ und/oder der minimalen Drosselklappenöffnungsfläche $(A_{eff}^{min})$ limitierte Drosselklappenöffnungsfläche ($A_{efcLim}$) enthält,

wobei die maximale Drosselklappenöffnungsfläche $(A_{eff}^{max})$ in einen maximal realisierbaren Saugrohrdruck ($p^{*,max}$) transformiert wird und die minimale Drosselklappenöffnungsfläche $(A_{eff}^{min})$ in einen minimal realisierbaren Saugrohrdruck ($p^{*,min}$) transformiert wird (50) und der Soll-Saugrohrdruck $(p_{sr}^*)$ in Abhängigkeit des transformierten maximal realisierbaren Saugrohrdrucks ($p^{*,max}$) und des transformierten minimal realisierbaren Saugrohrdrucks ($p^{*,min}$) limitiert wird (51),

wobei der Transformation (50) der maximalen Drosselklappenöffnungsfläche $(A_{eff}^{max})$ in den maximal realisierbaren Saugrohrdruck $p^{*,max}$ die folgende Beziehung zugrunde liegt:

$$p^{*,max} = \Delta p_{sr} + \tilde{p}_{sr} + bA_{eff}^{max};$$

und wobei der Transformation (50) der minimalen Drosselklappenöffnungsfläche in den minimal realisierbaren Saugrohrdruck $p^{*,min}$ die folgende Beziehung zugrunde liegt:

$$p^{*,min} = \Delta p_{sr} + \tilde{p}_{sr} + bA_{eff}^{min},$$

wobei $\Delta p_{sr}$ eine prognostizierte Veränderung des Saugrohrdrucks, $\tilde{p}_{sr}$ ein gemessener Saugrohrdruck, $b$ eine Variable, die von einem Durchflussfaktor durch die Drosselklappe, einer Leckage der Drosselklappe, einem Massenstrom durch die Drosselklappe und eines P-Anteils einer PI-Regelung abhängig ist, $A_{eff}^{max}$ die maximale Drosselklappenöffnungsfläche und $A_{eff}^{min}$ die minimale Drosselklappenöffnungsfläche ist.

2. Motorsteuerung mit einem Regelkreis (4; 6) zum Bestimmen einer Stellgröße zum Einstellen eines Saugrohrdrucks in einem Saugrohr (10) einer Verbrennungskraftmaschine ausgehend von einem Soll-Saugrohrdruck $(p_{sr}^*)$, wobei der Regelkreis (4; 6) eine Korrektureinheit (41; 61) zum Limitieren des Soll-Saugrohrdrucks $(p_{sr}^*)$ in Abhängigkeit eines Stellgrößengrenzwerts $(A_{eff}^{max}, A_{eff}^{min})$ und/oder einer von dem Stellgrößengrenzwert beeinflussten Größe $(A_{efcLim} - A_{efcUnLim})$ und eine Rücktransformationseinrichtung (41; 61) umfasst, die dazu ausgebildet ist, ausgehend von dem Stellgrößengrenzwert $(A_{eff}^{max}, A_{eff}^{min})$ oder der von dem Stellgrößengrenzwert beeinflussten Größe $(A_{efcLim} - A_{efcUnLim})$ mittels einer Transformation einen Soll-Saugrohrdruck-Korrekturwert zum Korrigieren des Soll-Saugrohrdrucks $(p_{sr}^*)$ zu bestimmen,

wobei der Stellgrößengrenzwert eine maximale Drosselklappenöffnungsfläche $(A_{eff}^{max})$ einer Drosselklappe (11) in dem Saugrohr (10) und/oder eine minimale Drosselklappenöffnungsfläche $(A_{eff}^{min})$ der Drosselklappe (11) umfasst und/oder wobei die von dem Stellgrößengrenzwert beeinflusste Größe $(A_{efcLim} - A_{efcUnLim})$ eine Größe ist, die eine mittels der maximalen Drosselklappenöffnungsfläche $(A_{eff}^{max})$ und/oder der minimalen Drosselklappenöffnungsfläche $(A_{eff}^{min})$ limitierte Drosselklappenöffnungsfläche $(A_{efcLim})$ enthält,

wobei der Regelkreis dazu ausgebildet ist, die maximale Drosselklappenöffnungsfläche $(A_{eff}^{max})$ in einen maximal realisierbaren Saugrohrdruck $(p^{*,max})$ zu transformieren und die minimale Drosselklappenöffnungsfläche $(A_{eff}^{min})$ in einen minimal realisierbaren Saugrohrdruck $(p^{*,min})$ zu transformieren (50) und der Soll-Saugrohrdruck $(p_{sr}^*)$ in Abhängigkeit des transformierten maximal realisierbaren Saugrohrdrucks $(p^{*,max})$ und des transformierten minimal realisierbaren Saugrohrdrucks $(p^{*,min})$ zu limitieren (51), wobei der Transformation (50) der maximalen Drosselklappenöffnungsfläche $(A_{eff}^{max})$ in den maximal realisierbaren Saugrohrdruck $p^{*,max}$ die folgende Beziehung zugrunde liegt:

$$p^{*,max} = \Delta p_{sr} + \tilde{p}_{sr} + bA_{eff}^{max};$$

und wobei der Transformation (50) der minimalen Drosselklappenöffnungsfläche in den minimal realisierbaren Saugrohrdruck $p^{*,min}$ die folgende Beziehung zugrunde liegt:

$$p^{*,min} = \Delta p_{sr} + \tilde{p}_{sr} + bA_{eff}^{min},$$

wobei $\Delta p_{sr}$ eine prognostizierte Veränderung des Saugrohrdrucks, $\tilde{p}_{sr}$ ein gemessener Saugrohrdruck, $b$ eine Variable, die von einem Durchflussfaktor durch die Drosselklappe, einer Leckage der Drosselklappe, einem Massenstrom durch die Drosselklappe und eines P-Anteils einer PI-Regelung abhängig ist, $A_{eff}^{max}$ die maximale Drosselklappenöffnungsfläche und $A_{eff}^{min}$ die minimale Drosselklappenöffnungsfläche ist.

**Claims**

1. Method for determining a manipulated variable for adjusting a suction pipe pressure in a suction pipe (10) of an internal combustion engine on the basis of a setpoint suction pipe pressure $(p_{sr}^{*})$, wherein the setpoint suction pipe pressure $(p_{sr}^{*})$ is limited as a function of a manipulated variable limiting value $(A_{eff}^{max}, A_{eff}^{min})$ and/or a variable ($A_{efcLim}$-$A_{efcUnLim}$) which is influenced by the manipulated variable limiting value,

wherein the manipulated variable limiting value comprises a maximum throttle valve opening area $(A_{eff}^{max})$ of a throttle valve (11) in the suction pipe (10) and/or a minimum throttle valve opening area $(A_{eff}^{min})$ of the throttle valve (11) and/or wherein the variable ($A_{efcLim}$-$A_{efcUnLim}$) which is influenced by the manipulated variable limiting value is a variable which contains a throttle valve opening area ($A_{efcLim}$) which is limited by means of the maximum throttle valve opening area $(A_{eff}^{max})$ and/or the minimum throttle valve opening area $(A_{eff}^{min})$,

wherein the maximum throttle valve opening area $(A_{eff}^{max})$ is transformed into a maximum realizable suction pipe pressure ($p^{*,max}$) and the minimum throttle valve opening area $(A_{eff}^{min})$ is transformed (50) into a minimum realizable suction pipe pressure ($p^{*,min}$) and the setpoint suction pipe pressure $(p_{sr}^{*})$ is limited (51) as a function of the transformed maximum realizable suction pipe pressure ($p^{*,max}$) and the transformed minimum realizable suction pipe pressure ($p^{*,min}$),

wherein the transformation (50) of the maximum throttle valve opening area $(A_{eff}^{max})$ into the maximum realizable suction pipe pressure $p^{*,max}$ is based on the following relationship:

$$p^{*,max} = \Delta p_{sr} + \tilde{p}_{sr} + bA_{eff}^{max};$$

and
wherein the transformation (50) of the minimum throttle valve opening area into the minimum realizable suction pipe pressure $p^{*,min}$ is based on the following relationship:

$$p^{*,min} = \Delta p_{sr} + \tilde{p}_{sr} + bA_{eff}^{min},$$

where $\Delta p_{sr}$ is a predicted change in the suction pipe pressure, $\tilde{p}_{sr}$ is a measured suction pipe pressure, b is a variable which is dependent on a flow factor through the throttle valve, a leakage of the throttle valve, a mass flow rate through the throttle valve and a P component of a PI controller, $A_{eff}^{max}$ is the maximum throttle valve opening area and $A_{eff}^{min}$ is the minimum throttle valve opening area.

2. Engine controller having a closed-loop control circuit (4; 6) for determining a manipulated variable for adjusting a suction pipe pressure in a suction pipe (10) of an internal combustion engine on the basis of a setpoint suction pipe pressure $(p_{sr}^{*})$, wherein the closed-loop control circuit (4; 6) comprises a correction unit (41; 61) for limiting the setpoint suction pipe pressure $(p_{sr}^{*})$ as a function of a manipulated variable limiting value $(A_{eff}^{max}, A_{eff}^{min})$ and/or a variable ($A_{efcLim}$-$A_{efcUnLim}$) which is influenced by the manipulated variable limiting value, and a back transformation device (41; 61), which is designed to determine, by means of a transformation and on the basis of the manipulated variable limiting value $(A_{eff}^{max}, A_{eff}^{min})$ or the variable ($A_{efcLim}$-$A_{efcUnLim}$) influenced by the manipulated variable limiting value, a setpoint suction pipe pressure correction value for correcting the setpoint suction pipe pressure $(p_{sr}^*)$,

wherein the manipulated variable limiting value comprises a maximum throttle vale opening area $(A_{eff}^{\overline{max}})$ of a throttle valve (11) in the suction pipe (10) and/or a minimum throttle valve opening area $(A_{eff}^{min})$ of the throttle valve (11) and/or wherein the variable ($A_{efcLim}$-$A_{efcUnLim}$) which is influenced by the manipulated variable limiting value is a variable which contains a throttle valve opening area ($A_{efcLim}$) which is limited by means of the maximum throttle valve opening area $(A_{eff}^{\overline{max}})$ and/or the minimum throttle valve opening area $(A_{eff}^{min})$,

wherein the closed-loop control circuit is designed to transform the maximum throttle valve opening area $(A_{eff}^{max})$ into a maximum realizable suction pipe pressure ($p^{*,max}$) and to transform (50) the minimum throttle valve opening area $(A_{eff}^{min})$ into a minimum realizable suction pipe pressure ($p^{*,min}$) and to limit (51) the setpoint suction pipe pressure $(p_{sr}^*)$ as a function of the transformed maximum realizable suction pipe pressure ($p^{*,max}$) and the transformed minimum realizable suction pipe pressure ($p^{*,min}$),

wherein the transformation (50) of the maximum throttle valve opening area $(A_{eff}^{max})$ into the maximum realizable suction pipe pressure $p^{*,max}$ is based on the following relationship:

$$p^{*,max} = \Delta p_{sr} + \tilde{p}_{sr} + b A_{eff}^{max};$$

and
wherein the transformation (50) of the minimum throttle valve opening area into the minimum realizable suction pipe pressure $p^{*,min}$ is based on the following relationship:

$$p^{*,min} = \Delta p_{sr} + \tilde{p}_{sr} + b A_{eff}^{min},$$

where $\Delta p_{sr}$ is a predicted change in the suction pipe pressure, $\tilde{p}_{sr}$ is a measured suction pipe pressure, b is a variable which is dependent on a flow factor through the throttle valve, a leakage of the throttle valve, a mass flow rate through the throttle valve and a P component of a PI controller, $A_{eff}^{max}$ is the maximum throttle valve opening area and $A_{eff}^{min}$ is the minimum throttle valve opening area.

## Revendications

1. Procédé de détermination d'une grandeur de commande destinée à régler une pression de collecteur d'admission dans un collecteur d'admission (10) d'un moteur à combustion interne à partir d'une pression de collecteur d'admission de consigne $(p_{sr}^*)$, la pression de collecteur d'admission de consigne $(p_{sr}^*)$ étant limitée en fonction d'une valeur limite de grandeur de commande $(A_{eff}^{max}, A_{eff}^{min})$ et/ou d'une grandeur ($A_{efcLim}$ - $A_{efcUnLim}$) influencée par la valeur limite de grandeur de commande,
la valeur limite de grandeur de commande comprenant une surface d'ouverture de clapet d'étranglement maximale $(A_{eff}^{max})$ d'un clapet d'étranglement (11) dans le collecteur d'admission (10) et/ou une surface d'ouverture de clapet d'étranglement minimale $(A_{eff}^{min})$ du clapet d'étranglement (11) et/ou la grandeur ($A_{efcLim}$ - $A_{efcUnLim}$) influencée par la valeur limite de grandeur de commande étant une grandeur qui contient une surface d'ouverture de clapet d'étranglement ($A_{efcLim}$) limitée au moyen de la surface d'ouverture de clapet d'étranglement maximale $(A_{eff}^{max})$ et/ou de la surface d'ouverture de clapet d'étranglement minimale $(A_{eff}^{min})$,

la surface d'ouverture de clapet d'étranglement maximale $(A_{eff}^{max})$ étant transformée (50) en une pression de collecteur d'admission maximale réalisable ($p^{*.max}$) et la surface d'ouverture de clapet d'étranglement minimale $(A_{eff}^{min})$ étant transformée en une pression de collecteur d'admission minimale réalisable ($p^{*.min}$) et la pression de collecteur d'admission de consigne $(p_{sr}^{*})$ étant limitée (51) en fonction de la pression de collecteur d'admission maximale réalisable ($p^{*.max}$) transformée et de la pression de collecteur d'admission minimale réalisable ($p^{*.min}$) transformée,

la transformation (50) de la surface d'ouverture de clapet d'étranglement maximale $(A_{eff}^{max})$ en la pression de collecteur d'admission maximale réalisable $p^{*.max}$ s'appuyant sur l'équation suivante :

$$p^{*.max} = \Delta p_{sr} + \tilde{p}_{sr} + bA_{eff}^{max} \; ;$$

et

la transformation (50) de la surface d'ouverture de clapet d'étranglement minimale $(A_{eff}^{min})$ en la pression de collecteur d'admission minimale réalisable $p^{*.min}$ s'appuyant sur l'équation suivante :

$$p^{*.min} = \Delta p_{sr} + \tilde{p}_{sr} + bA_{eff}^{min},$$

$\Delta p_{sr}$ désignant une modification pronostiquée de la pression de collecteur d'admission, $\tilde{p}_{sr}$ désignant une pression de collecteur d'admission mesurée, b désignant une variable qui est dépendante d'un facteur de débit à travers le clapet d'étranglement, d'une fuite du clapet d'étranglement, d'un débit massique à travers le clapet d'étranglement et d'une composante P d'une régulation PI, $A_{eff}^{max}$ désignant la surface d'ouverture de clapet d'étranglement maximale et $A_{eff}^{min}$ la surface d'ouverture de clapet d'étranglement minimale.

2. Commande de moteur comprenant un circuit de régulation (4 ; 6) destiné à déterminer une grandeur de commande destinée à régler une pression de collecteur d'admission dans un collecteur d'admission (10) d'un moteur à combustion interne à partir d'une pression de collecteur d'admission de consigne $(p_{sr}^{*})$, le circuit de régulation (4 ; 6) comprenant une unité de correction (41 ; 61) destinée à limiter la pression de collecteur d'admission de consigne $(p_{sr}^{*})$ en fonction d'une valeur limite de grandeur de commande $(A_{eff}^{max}, A_{eff}^{min})$ et/ou d'une grandeur ($A_{efcLim}$ - $A_{efcUnLim}$) influencée par la valeur limite de grandeur de commande ainsi qu'un dispositif de transformation inverse (41 ; 61), lequel est configuré pour, à partir de la valeur limite de grandeur de commande $(A_{eff}^{max}, A_{eff}^{min})$ ou de la grandeur ($A_{efcLim}$ - $A_{efcUnLim}$) influencée par la valeur limite de grandeur de commande, déterminer au moyen d'une transformation une valeur de correction de pression de collecteur d'admission de consigne destinée à corriger la pression de collecteur d'admission de consigne $(p_{sr}^{*})$,
la valeur limite de grandeur de commande comprenant une surface d'ouverture de clapet d'étranglement maximale

EP 3 543 514 B1

$(A_{eff}^{max})$ d'un clapet d'étranglement (11) dans le collecteur d'admission (10) et/ou une surface d'ouverture de clapet d'étranglement minimale $(A_{eff}^{min})$ du clapet d'étranglement (11) et/ou la grandeur ($A_{efcLim}$ - $A_{efcUnLim}$) influencée par la valeur limite de grandeur de commande étant une grandeur qui contient une surface d'ouverture de clapet d'étranglement ($A_{efcLim}$) limitée au moyen de la surface d'ouverture de clapet d'étranglement maximale $(A_{eff}^{max})$ et/ou de la surface d'ouverture de clapet d'étranglement minimale $(A_{eff}^{min})$,

le circuit de régulation étant configuré pour transformer la surface d'ouverture de clapet d'étranglement maximale $(A_{eff}^{max})$ en une pression de collecteur d'admission maximale réalisable ($p^{*.max}$) et transformer (50) la surface d'ouverture de clapet d'étranglement minimale $(A_{eff}^{min})$ en une pression de collecteur d'admission minimale réalisable ($p^{*.min}$) et limiter (51) la pression de collecteur d'admission de consigne $(p_{sr}^{*})$ en fonction de la pression de collecteur d'admission maximale réalisable ($p^{*.max}$) transformée et de la pression de collecteur d'admission minimale réalisable ($p^{*.min}$) transformée,

la transformation (50) de la surface d'ouverture de clapet d'étranglement maximale $(A_{eff}^{max})$ en la pression de collecteur d'admission maximale réalisable $p^{*.max}$ s'appuyant sur l'équation suivante :

$$p^{*.max} = \Delta p_{sr} + \tilde{p}_{sr} + bA_{eff}^{max} \; ;$$

et

la transformation (50) de la surface d'ouverture de clapet d'étranglement minimale $(A_{eff}^{min})$ en la pression de collecteur d'admission minimale réalisable $p^{*.min}$ s'appuyant sur l'équation suivante :

$$p^{*.min} = \Delta p_{sr} + \tilde{p}_{sr} + bA_{eff}^{min},$$

$\Delta p_{sr}$ désignant une modification pronostiquée de la pression de collecteur d'admission, $\tilde{p}_{sr}$ une pression de collecteur d'admission mesurée, b une variable qui est dépendante d'un facteur de débit à travers le clapet d'étranglement, d'une fuite du clapet d'étranglement, d'un débit massique à travers le clapet d'étranglement et d'une composante P d'une régulation PI, $A_{eff}^{max}$ désignant la surface d'ouverture de clapet d'étranglement maximale et $A_{eff}^{min}$ la surface d'ouverture de clapet d'étranglement minimale.

14

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009000609 A1
- DE 102015118980 A1
- DE 102016111065 A1
- DE 102010023636 A1

**In der Beschreibung aufgeführte Nicht-Patentliteratur**

- Design of reference governor for a class of nonlinear systems with input constraints. **HYUN MIN DO et al.** CONTROL, AUTOMATIONAND SYSTEMS (IC-CAS), 2011 11TH INTERNATIONALCONFEREN-CEON. IEEE, 26. Oktober 2011, 912-917